# EUROPEAN PATENT SPECIFICATION

(11) **EP 4 330 163 B1**
(45) Date of publication and mention of the grant of the patent: **07.10.2026**
(21) Application number: 22722511.7
(22) Date of filing: 13.04.2022
(51) Int. Cl.: B65G 1/04

(54) **CONTAINER HANDLER AND METHOD FOR HANDLING A STORAGE CONTAINER**
BEHÄLTERHANDHABUNGSGERÄT UND VERFAHREN ZUR HANDHABUNG EINES LAGERBEHÄLTERS
MANIPULATEUR DE CONTENEUR ET PROCÉDÉ DE MANIPULATION D'UN CONTENEUR DE STOCKAGE

(30) Priority: 28.04.2021 NO 20210521
(43) Date of publication of application: 06.03.2024
(73) Proprietor: AutoStore Technology AS, 5578 Nedre Vats (NO)
(72) Inventor: HEGGEBØ, Jørgen, Djuve, 1405 Langhus (NO)
(74) Representative: Kilburn & Strode LLP
(86) International application number: PCT/EP2022/059819
(87) International publication number: WO 2022/228894

(56) References cited:
- WO-A1-2019/206482
- CN-A- 110 606 365
- US-A1- 2020 290 804
- US-A1- 2021 032 034

## Description

### FIELD OF THE INVENTION

The present invention relates to a container handler for handling a storage container in a column of a frame structure of an automated storage and retrieval system. The present invention also relates to a container handling vehicle for handling a storage container in an automated storage and retrieval system. The present invention also relates to a method for handling a storage container in a column of a frame structure of an automated storage and retrieval system.

### BACKGROUND AND PRIOR ART

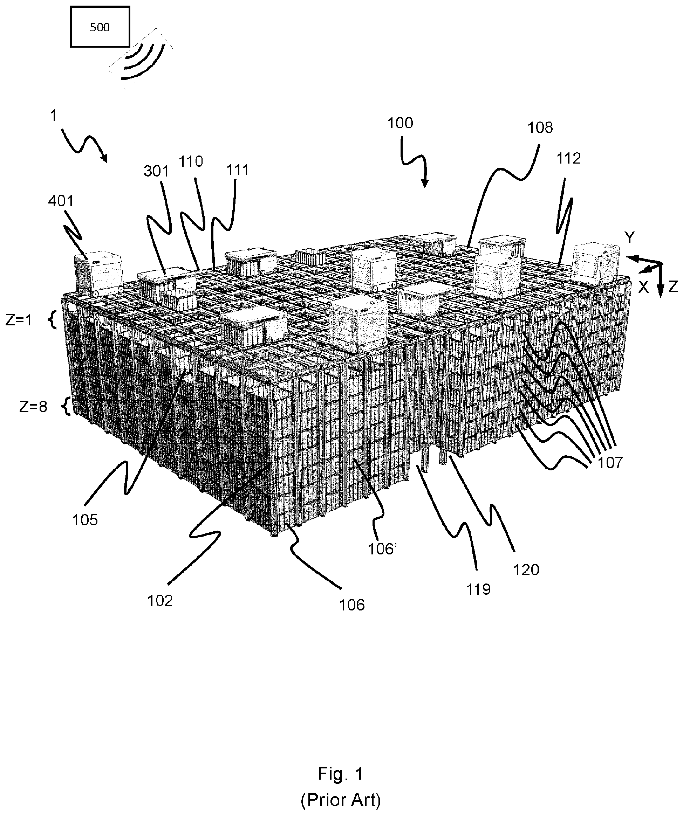

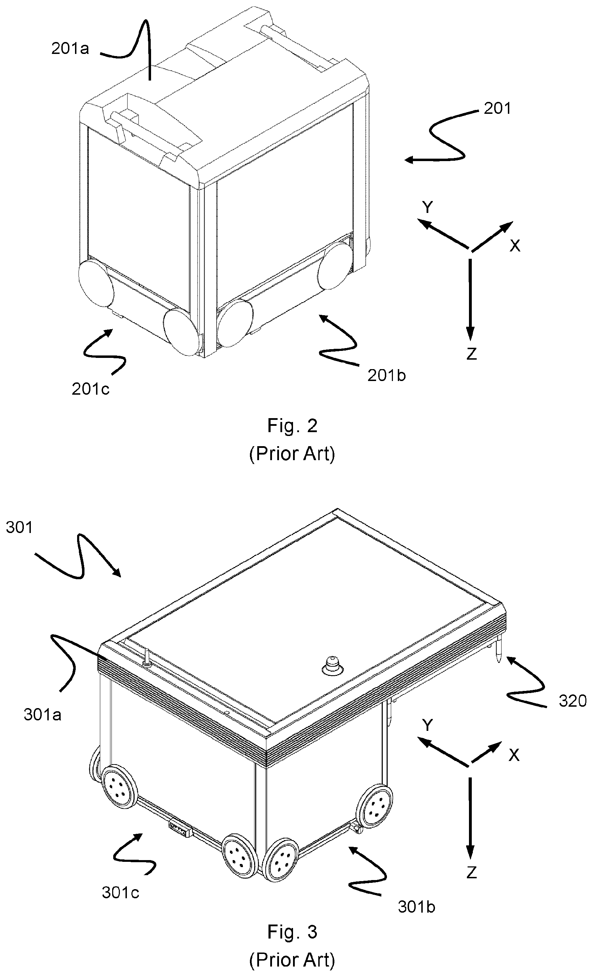

Fig. 1 discloses a typical prior art automated storage and retrieval system 1 with a framework structure 100 and Figs. 2, 3 and 4 disclose three different prior art container handling vehicles 201,301,401 suitable for operating on such a system 1.

The framework structure 100 comprises upright members 102 and a storage volume comprising storage columns 105 arranged in rows between the upright members 102. In these storage columns 105 storage containers 106, also known as bins, are stacked one on top of one another to form stacks 107. The members 102 may typically be made of metal, e.g. extruded aluminum profiles.

The framework structure 100 of the automated storage and retrieval system 1 comprises a rail system 108 arranged across the top of framework structure 100, on which rail system 108 a plurality of container handling vehicles 201,301,401 may be operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 201,301,401 in a first direction X across the top of the frame structure 100, and a second set of parallel rails 111 arranged perpendicular to the first set of rails 110 to guide movement of the container handling vehicles 201,301,401 in a second direction *Y* which is perpendicular to the first direction *X.* Containers 106 stored in the columns 105 are accessed by the container handling vehicles 201,301,401 through access openings 112 in the rail system 108. The container handling vehicles 201,301,401 can move laterally above the storage columns 105, i.e. in a plane which is parallel to the horizontal *X-Y* plane.

The upright members 102 of the framework structure 100 may be used to guide the storage containers during raising of the containers out from and lowering of the containers into the columns 105. The stacks 107 of containers 106 are typically self-supportive.

Each prior art container handling vehicle 201,301,401 comprises a vehicle body 201a,301a,401a and first and second sets of wheels 201b,301b,201c,301c,401b,401c which enable the lateral movement of the container handling vehicles 201,301,401 in the *X* direction and in the *Y* direction, respectively. In Figs. 2, 3 and 4 two wheels in each set are fully visible. The first set of wheels 201b,301b,401b is arranged to engage with two adjacent rails of the first set 110 of rails, and the second set of wheels 201c,301c,401c is arranged to engage with two adjacent rails of the second set 111 of rails. At least one of the sets of wheels 201b,301b,201c,301c,401b,401c can be lifted and lowered, so that the first set of wheels 201b,301b,401b and/or the second set of wheels 201c,301c,401c can be engaged with the respective set of rails 110, 111 at any one time.

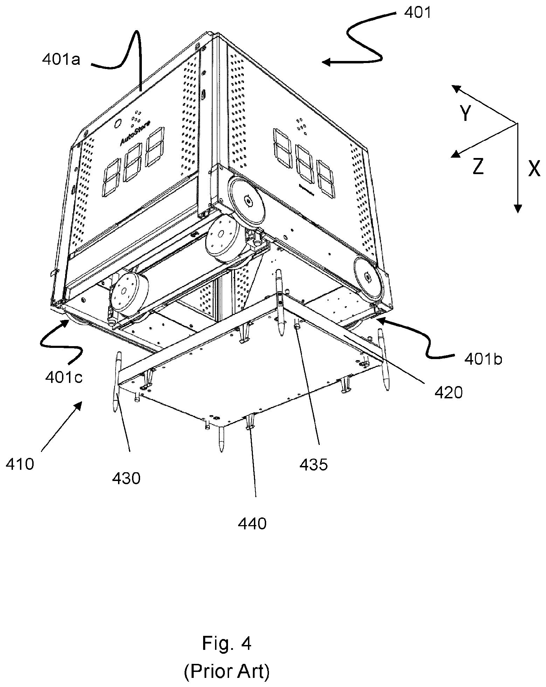

Each prior art container handling vehicle 201,301,401 also comprises a lifting device for vertical transportation of storage containers 106, e.g. raising a storage container 106 from, and lowering a storage container 106 into, a storage column 105. The lifting device comprises one or more gripping / engaging devices which are adapted to engage a storage container 106, and which gripping / engaging devices can be lowered from the vehicle 201,301,401 so that the position of the gripping / engaging devices with respect to the vehicle 201,301,401 can be adjusted in a third direction *Z* which is orthogonal the first direction *X* and the second direction *Y*. Parts of the gripping device of the container handling vehicles 301,401 are shown in Figs. 3 and 4 indicated with reference number 304,404. The gripping device of the container handling device 201 is located within the vehicle body 201a in Fig. 2.

Conventionally, and also for the purpose of this application, *Z*=1 identifies the uppermost layer available for storage containers, i.e. the layer immediately below the rail system 108, Z=2 the second layer below the rail system 108, *Z*=3 the third layer etc. In the exemplary prior art disclosed in Fig. 1, *Z*=8 identifies the lowermost, bottom layer of storage containers. Similarly, *X=*1...*n* and *Y*=1...*n* identifies the position of each storage column 105 in the horizontal plane. The container handling vehicles 201,301,401 can be said to travel in layer *Z*=0, and each storage column 105 can be identified by its *X* and *Y* coordinates. Thus, the storage containers shown in Fig. 1 extending above the rail system 108 are also said to be arranged in layer *Z*=0.

The storage volume of the framework structure 100 has often been referred to as a grid 104, where the possible storage positions within this grid are referred to as storage cells. Each storage column may be identified by a position in an *X-* and *Y-*direction, while each storage cell may be identified by a container number in the *X-, Y-* and *Z*-direction.

Each prior art container handling vehicle 201,301,401 comprises a storage compartment or space for receiving and stowing a storage container 106 when transporting the storage container 106 across the rail system 108. The storage space may comprise a cavity arranged internally within the vehicle body 201a as shown in Figs. 2 and 4 and as described in e.g. WO2015/193278A1 and WO2019/206487A1.

Fig. 3 shows an alternative configuration of a container handling vehicle 301 with a cantilever construction. Such a vehicle is described in detail in e.g. NO317366.

The cavity container handling vehicles 201 shown in Fig. 2 may have a footprint that covers an area with dimensions in the X and Y directions which is generally equal to the lateral extent of a storage column 105, e.g. as is described in WO20151193278A1.

The term 'lateral' used herein may mean 'horizontal'.

Alternatively, the cavity container handling vehicles 401 may have a footprint which is larger than the lateral area defined by a storage column 105 as shown in Fig. 1 and 4, e.g. as is disclosed in WO2014/090684A1 or WO2019/206487A1. The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail may comprise two parallel tracks; or the rail system may comprise rails with one track in one direction and rails with two parallel tracks in the other direction.

WO2018/146304A1 illustrates a typical configuration of rail system 108 comprising rails and parallel tracks in both *X* and *Y* directions

In the framework structure 100, a majority of the columns 105 are storage columns 105, i.e. columns 105 where storage containers 106 are stored in stacks 107. However, some columns 105 may have other purposes. In Fig. 1, columns 119 and 120 are such special-purpose columns used by the container handling vehicles 201,301,401 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a 'port column' 119,120. The transportation to the access station may be in any direction, that is horizontal, tilted and/or vertical. For example, the storage containers 106 may be placed in a random or dedicated column 105 within the framework structure 100, then picked up by any container handling vehicle and transported to a port column 119,120 for further transportation to an access station. Note that the term 'tilted' means transportation of storage containers 106 having a general transportation orientation somewhere between horizontal and vertical.

In Fig. 1, the first port column 119 may for example be a dedicated drop-off port column where the container handling vehicles 201,301 can drop off storage containers 106 to be transported to an access or a transfer station, and the second port column 120 may be a dedicated pick-up port column where the container handling vehicles 201,301,401 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station

The conveyor system may be arranged to transfer storage containers 106 between different framework structures, e.g. as is described in WO2014/075937A1.

When a storage container 106 stored in one of the columns 105 disclosed in Fig. 1 is to be accessed, one of the container handling vehicles 201,301,401 is instructed to retrieve the target storage container 106 from its position and transport it to the drop-off port column 119. This operation involves moving the container handling vehicle 201,301 to a location above the storage column 105 in which the target storage container 106 is positioned, retrieving the storage container 106 from the storage column 105 using the container handling vehicle's 201,301,401 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201,301,401 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201,301,401 is instructed to pick up the storage container 106 from the pick-up port column 120 and transport it to a location above the storage column 105 where it is to be stored. After any storage containers 106 positioned at or above the target position within the stack 107 have been removed, the container handling vehicle 201,301,401 positions the storage container 106 at the desired position. The removed storage containers 106 may then be lowered back into the storage column 105, or relocated to other storage columns 105.

For monitoring and controlling the automated storage and retrieval system 1, e.g. monitoring and controlling the location of respective storage containers 106 within the framework structure 100, the content of each storage container 106; and the movement of the container handling vehicles 201,301,401 so that a desired storage container 106 can be delivered to the desired location at the desired time without the container handling vehicles 201,301,401 colliding with each other, the automated storage and retrieval system 1 comprises a control system 500 which typically is computerized and which typically comprises a database for keeping track of the storage containers 106.

In fig. 4, a prior art container handler 410 is shown, comprising a container frame 420 (parts of a container frame for the cantilever type of vehicle is indicated as 320 in fig. 3). The container handler 410 comprises guiding pins 430 to ensure that the lifting frame 304 is lowered correctly into the storage columns and connects properly with the container. The container handler 410 comprises a gripper 440 for releasable connection to the storage container. The container handler 410 further comprises a contact sensor 435 for sensing physical contact with the storage container. The contact sensor 435 works similar to an electromechanical switch - a part of the sensor will protrude down from the container frame 420 when there is no contact between the storage container and the contact sensor, and the part of the sensor will be pushed up relative to the container frame 420 when there is contact between the storage container and the contact sensor.

CN110606365A, which has been considered by the EPO Examiner during the prosecution of the application to be the closest prior art, describes, according to its abstract, a shuttle vehicle, in particular a circulation box gripping and placing device for the shuttle vehicle. The box gripping and placing device comprises a gripping and placing bottom plate, gripping jaws, driving rods, driving shafts, a driving disc, a driving motor, a gripping jaw position detection device, guide columns and a gripping and placing position detection device, wherein the two gripping jaws are symmetrically arranged, are hinged to the two sides of the bottom of the gripping and placing bottom plate, and are located on the two sides of a circulation box, one end of the driving rods are hinged to the gripping jaws, and the driving shafts are hinged to the other ends of the driving rods; the driving disc is symmetrically provided with the two driving shafts, and is installed on a motor shaft of the driving motor, the driving shafts are symmetrically located on the two sides of the motor shaft, and the driving motor is fixed on the gripping and placing bottom plate; and the gripping jaw position detection device is used for detecting the positions of the gripping jaws, the guiding columns are fixed on the gripping and placing bottom plate and located on the four corners of the circulation box, and the gripping position detection device is used for detecting whether the circulation box is located at the gripping positions of the gripping jaws

One object of the present invention is to provide an improved container handler of a container handling vehicle.

### SUMMARY OF THE INVENTION

The present invention relates to a container handler for handling a storage container in a column of a frame structure of an automated storage and retrieval system, wherein the container handler comprises:
- a lifting frame which is arranged for vertical movement within the column of the frame structure;
- a first guide pin protruding downwardly from the lifting frame for guiding the lifting frame vertically within the column of the frame structure relative to the storage container;
- a gripper element protruding downwardly from the lifting frame for gripping the storage container;

wherein the first guide pin comprises a first sensor for sensing the position of the lifting frame relative to the storage container;
wherein the container handler comprises a control system provided in communication with the first sensor, the control system controlling the vertical movement of the lifting frame and controlling the gripper element based on a signal received from the first sensor; and wherein the control system is configured to start the movement of the gripper element before the lifting frame is in physical contact with the storage container based on the signal received from the first sensor.

As used herein, the term "handling" refers to the actions of:
- retrieving a storage container from the column of the frame structure, which comprises the sub-actions of lowering the lifting frame down towards a storage container, gripping the storage container and then elevating the storage container up;
- inserting a storage container into the column of the frame structure, which comprises the sub-actions of lowering the storage container with a storage container down, releasing the grip and then elevating the lifting frame up;
- holding the storage container stationary in a vertical direction relative to the framework structure for a period of time. The storage container may be held stationary also in the horizontal direction during the holding action, or it may be moved horizontally during the holding action.

It should be noted that the term "position of the lifting frame relative to the storage container " may refer to the distance between the lifting frame and the storage container, speed or acceleration.

In one aspect, the first sensor is a non-contact sensor.

Accordingly, the first sensor is not in physical contact with the storage container.

The mechanical wear on the sensor is therefore considerably reduced when compared to the prior art electromechanical sensor discussed above.

In one aspect, the first sensor is a capacitive sensor, an ultra-sonic sensor or an optical sensor.

In one aspect, the optical sensor is an optical sensor with light-emitting properties.

It should be noted that the term "light" includes visible light, infrared light and ultraviolet light. As it is considered to be little or no light present in the storage columns of the storage system, in particular when the storage container of interest is stacked far below the top of the frame structure, the capacitive sensor, the ultra-sonic sensor or the optical sensor with light-emitting properties may be advantageous.

In one aspect, the control system is provided in communication with a control system of the storage system.

In one aspect, the first sensor is provided at a vertical distance below the lifting frame or is extending along a vertical distance below the lifting frame.

The vertical distance is here defined as the distance from a lower contact surface of the lifting frame, wherein the lower contact surface is in physical contact with the storage container during the retrieving, inserting and holding action.

**In** one aspect, the distance between the first sensor and the lifting frame is 0.1 - 10 cm, preferably 2 - 5 cm.

**In** one aspect, the first guide pin comprises a further sensor for sensing the position of the storage container relative to the lifting frame, wherein the further sensor is provided at a further distance below the first sensor.

**In** one aspect, the first sensor is provided in the end of the first guide pin.

**In** one aspect, the container handler comprises four first guide pins protruding downwardly from the lifting frame for guiding the lifting frame vertically within the column of the frame structure relative to the storage container;
wherein at least two of the first guide pins comprises first sensors for sensing the position of the lifting frame relative to the storage container.

In one aspect, one first sensor in one first guide pin may be provided at one distance from the lifting frame, while another first sensor in another guide pin may be provided at a different distance of the lifting frame.

In one aspect, the control system is configured to decelerate the lowering of the lifting frame down towards the storage container based on the signal received from the first sensor.

The prior art electromechanical sensor only gives the control system a confirmation signal confirming that physical contact between the lifting frame and the storage container has been achieved. Here, the control system is configured to reduce the speed of the vertical movement of the lifting frame towards the storage container based on the position, i.e. depth, of the storage container in the framework structure. This position is typically communicated to the container handling vehicle from the control system of the storage system. To avoid that the lifting frame crashing into the storage container, the speed of the lowering of the lifting frame is reduced when the lifting frame approaches the storage container.

Due to the sensor being located at distance from the lifting frame, the control system is able to predict more accurately the remaining vertical movement for the lifting frame until physical contact between the lifting frame and the storage container is achieved. This also allows the lifting frame to be lowered faster up to the point of deceleration. Hence, the safety margin for decelerating the speed of lowering of the lifting frame can be reduced, and a more efficient container handler is achieved. In addition, or alternatively, the speed of the vertical movement of the lifting frame can be increased for the first part of the decent, which will also increase efficiency.

In one aspect, the container handler comprises a top structure and a lifter for moving the lifting frame vertically relative to the top structure.

In one aspect, the top structure is a part of a container handling vehicle. Here, control system may be a vehicle control system.

In one aspect, the top structure is a part of a container lift. Here, the control system may be a lift control system.

In one aspect, the container handler comprises:
- a second guide pin protruding upwardly from the lifting frame for guiding the lifting frame relative to the top structure;
wherein the second guide pin comprises a second sensor for sensing the position of the top structure relative to the lifting frame.

In one aspect, the first guide pin and the second guide pin are provided as one body secured to the lifting frame.

In one aspect, the second sensor is a non-contact sensor. In one aspect, also the second sensor is a capacitive sensor, an ultra-sonic sensor, an optical sensor and/or an optical sensor with light-emitting properties. Preferably, the first sensor and the second sensor are of the same type.

In one aspect, the control system is controlling the vertical movement of the lifting frame based on the signal received from the second sensor.

In one aspect, the second sensor is provided at a distance above the lifting frame or is extending along a distance above the lifting frame.

In one aspect, the top structure is a part of a container lift. In one aspect, the top structure is a part of a container handling vehicle.

In one aspect, the control system is configured to decelerate the elevation of the lifting frame up towards the top structure based on the signal received the second sensor.

In one aspect, the first sensor is directed towards a central axis of the lifting frame.

In one aspect, the lifting frame is adapted to be received at least partially within the top structure, wherein the second sensor is directed away from a central axis of the lifting frame.

In one aspect, the electric motor is connected to the lifting frame by means of bands. Alternatively, the electric motor is connected to the lifting frame by means of wires etc.

In one aspect, the lifting frame is a rectangular planar frame, preferably a plate-structure.

In one aspect, the lifting frame may comprise a central opening, allowing product items to be inserted into and retrieved from the storage container when held by the container handler.

The present invention also relates to a container handling vehicle for handling a storage container in an automated storage and retrieval system, wherein the container handling vehicle comprises:
- a vehicle body;
- a container handler for handling the storage container relative to the vehicle body; wherein the container handler comprises:
- a lifting frame vertically movable relative to the vehicle body;
- a first guide pin protruding downwardly from the lifting frame for guiding the lifting frame relative to the storage container;
- a gripper element protruding downwardly from the lifting frame for gripping the storage container;

wherein the first guide pin comprises a first sensor for sensing the position of the lifting frame relative to the storage container;
wherein the container handler comprises a control system provided in communication with the first sensor, the control system controlling the vertical movement of the lifting frame and controlling the gripper element based on a signal received from the first sensor; and wherein the control system is configured to start the movement of the gripper element before the lifting frame is in physical contact with the storage container based on the signal received from the first sensor.

The present invention also relates to a method for handling a storage container in a column of a frame structure of an automated storage and retrieval system, wherein the method comprises the following steps:
- sensing the position of the lifting frame relative to the storage container by means of a first sensor provided in a first guide pin protruding downwardly from the lifting frame;
- controlling a vertical movement of the lifting frame based on a signal received from the first sensor.

In one aspect, the method is controlling the vertical movement of the lifting frame in the immediate proximity of the storage container based on a signal received from the first sensor.

In one aspect, the method further comprises the step of:
- controlling a gripper element of the lifting frame based on a signal received from the first sensor.

In one aspect, the method further comprises the steps of:
- sensing a position of a top structure relative to the lifting frame by means of a second sensor provided in a second guide pin protruding upwardly from the lifting frame;
- controlling a vertical movement of the lifting frame based on a signal received from the second sensor.

In one aspect, the method is controlling the vertical movement of the lifting frame in the immediate proximity of the top structure based on a signal received from the second sensor.

### BRIEF DESCRIPTION OF THE DRAWINGS

Following drawings are appended to facilitate the understanding of the invention. The drawings show embodiments of the invention, which will now be described by way of example only, where:
Fig. 1 is a perspective view of a framework structure of a prior art automated storage and retrieval system.
Fig. 2 is a perspective view of a prior art container handling vehicle having an internally arranged cavity for carrying storage containers therein.
Fig. 3 is a perspective view of a prior art container handling vehicle having a cantilever for carrying storage containers underneath.
Fig. 4 is a perspective view from below of an alternative container handling vehicle having an internally arranged cavity for carrying storage containers therein.
Fig. 5 illustrates a first embodiment of the container handler.
Fig. 6 illustrates an enlarged view of a second embodiment of the first guiding pin.
Fig. 7 illustrates an enlarged view of a third embodiment of the first guiding pin.
Fig. 8a illustrates the third embodiment of the first container handler being used to retrieve a storage container, wherein the lifting frame is provided at an intermediate distance between the top structure and the storage container.
Fig. 8b illustrates that the lifting frame has been lowered further towards the storage container.
Fig. 8c illustrates that the lifting frame has been lowered into contact with the storage container.

### DETAILED DESCRIPTION OF THE INVENTION

In the following, embodiments of the invention will be discussed in more detail with reference to the appended drawings. It should be understood, however, that the drawings are not intended to limit the invention to the subject-matter depicted in the drawings.

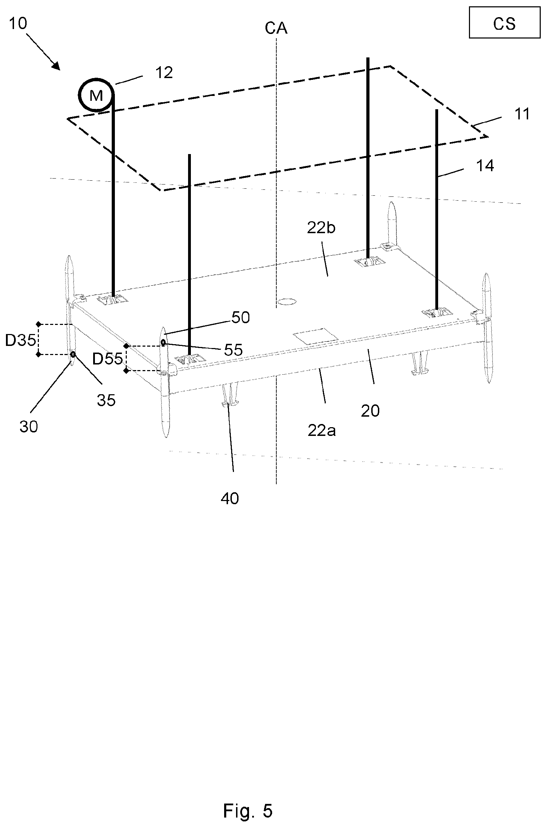

Initially, it is referred to fig. 5, where it is shown a container handler 10. The container handler 10 comprises a top structure indicated as a dashed rectangle 11 and lifter 12 located within or adjacent to the top structure 11. The lifter 12 comprises an electric motor and a band reel rotated by the electric motor. Alternatively, a hydraulic or pneumatic lifter may be used.

The container handler 10 further comprise a lifting frame 20 vertically movable relative to the top structure 11 by means of the lifter 12 and bands 14 reeled onto and reeled out from the band reel.

The top structure 11 may be a part of a container handling vehicle, for example one of the container vehicles 201, 301, 401. The top structure 11 may also be a part of a container lift, for example a container lift used to lift storage containers down to or up from a port, an access station etc. The container lift may use one dedicated column of the framework structure 100 to supply storage containers to and/or retrieve storage containers from this access station.

The container handler 10 comprises four first guide pins 30 and four second guide pins 50. The first guide pins 30 are located in the respective corners of the lifting frame 20 and protrude downwardly from the lifting frame 20. The second guide pins 50 are also located in the respective corners of the lifting frame 20, but they protrude upwardly from the lifting frame 20.

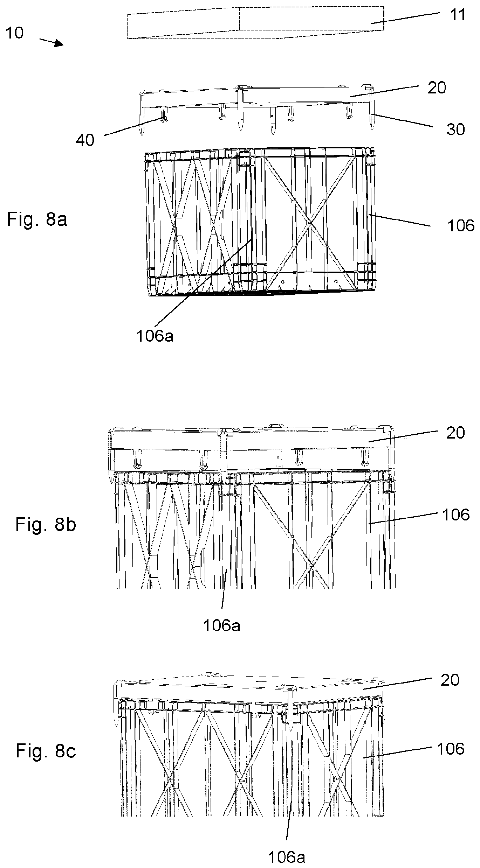

The first guide pins 30 and second guide pins 50 are used for guiding the lifting frame 20 relative to the column 105 in the framework structure 100, to ensure that the lifting frame is correctly positioned relative to the horizontal members of the framework structure 100 and relative to the storage container 106. In addition, the first guide pins 30 are used for guiding the lifting frame 20 relative to the storage container 106. In fig. 8a, 8b and 8c, it is shown that the first guide pins 30 are placed relative to a curved area 106a in each corner of the storage container 106. In fig. 8c, it is shown that the lower surface of the lifting frame 20 is brought into physical contact with the upper surface of the storage container. This lower surface of the lifting frame may be referred to as a container contacting surface 22a. In addition, the second guide pins 50 are used for guiding the lifting frame 20 relative to the top structure 11. The upper surface of the lifting frame 20 may similarly be referred to as a top structure contacting surface 22b, as this upper surface of the lifting frame 20 in the present embodiment is in contact with the top structure 11 when elevated to its uppermost position.

The container handler 10 further comprises a gripper element 40 protruding downwardly from the lifting frame 20 for gripping the storage container 106. The gripper element 40 may be of a prior art type, and will not be described further in detail herein. The gripper element 10 has two states - a gripping state, in which the storage container will be lifted together with the lifting frame, and a releasing state in which the storage container will not be lifted together with the lifting frame.

The container handler 10 further comprises a control system CS for controlling the lifter 12 and the gripper element 40.

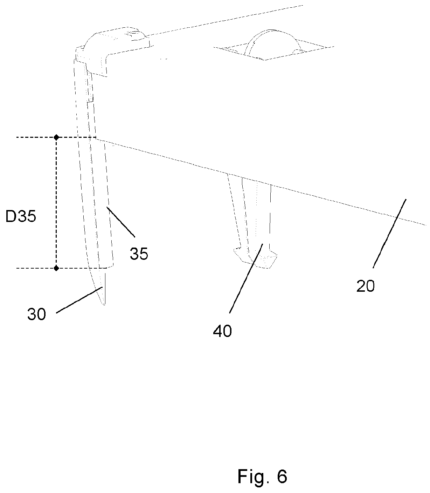

It is now referred to fig. 5 and fig. 6, wherein it is shown that the first guide pin 30 comprises a first sensor 35 for sensing the position of the lifting frame 20 relative to the storage container 106. It is shown that the first sensor 35 is provided at a vertical distance D35 below the container contacting surface 22a of the lifting frame 20. In the embodiment shown in fig. 5, the vertical distance D35 is 5.5 cm. The first sensor 35 is directed towards a central axis CA of the lifting frame 20.

It is now referred to fig. 5 again, wherein it is shown that the second guide pin 50 comprises a second sensor 55 for sensing the position of the top structure 11 relative to the lifting frame 20. It is shown that the second sensor 35 is provided at a vertical distance D55 above the top structure contacting surface 22b. The second sensor 55 is directed away from the central axis CA of the lifting frame 20.

The above first sensor 35 and second sensor 55 are preferably non-contact sensors, and hence, the first sensor 35 is not in physical contact with the storage container and the second sensor 55 is not in contact with the top structure 11. The mechanical wear on the sensors is therefore considerably reduced when compared to the prior art electromechanical sensor.

The first sensor 35 and the second sensor 55 may be a capacitive sensor, an ultra-sonic sensor or an optical sensor, for example an optical sensor with light-emitting properties.

In addition to reduced mechanical wear, another advantage with the first sensor 35 is that the exact position of the storage container 106 may be sensed before the lifting frame 20 comes into physical contact with the storage container. Similarly, by means of the second sensor 55, the exact position of the top structure 11 may be sensed before the lifting frame 20 comes into physical contact with the top structure 11.

The control system CS is provided in communication with the first sensor 35 and the second sensor 55. The control system CS is configured to control the vertical movement of the lifting frame 20 based on the signals from the first sensor 35 and the second sensor 55. It should be noted that the control system CS is also in communication with the central control system 500 of the automated storage and retrieval system 1.

It should be noted that the output signal from the first sensor 35 and the second sensor 55 may be of different types. In one embodiment, the output signal may be a Boolean signal, i.e. either true or false, where false may represent a state where no storage container or top structure has been detected and where true may represent a state where a storage container or top structure has been detected. In a second embodiment, the output signal may be a continuous or discrete parameter indicating gradually how far the lifting frame 20 is from the storage container or the top structure.

Initially, it should be noted that the efficiency of the automated storage and retrieval system 1 is dependent on many factors. One such factor is the time used to retrieve storage containers from the storage columns, the time used to insert storage containers into the storage columns, the time used to supply storage containers to access points and the time used to retrieve storage containers from the access points. Therefore, it is advantageous that the lifting frame moves as fast as possible. In prior art, the position of the storage container is known. Therefore, also the depth (z-level) of the storage container is known. During retrieval, the lifting frame 20 is therefore lowered towards the storage container at maximum speed until the lifting frame approaches the expected depth of the storage container and deceleration starts to avoid that the lifting frame crashes into the storage container.

Due to the first sensor 35 being located at distance D35 from the lifting frame 20, the control system CS is able to predict more accurately the remaining vertical movement for the lifting frame 20 until physical contact between the lifting frame 20 and the storage container 106 is achieved. This also allows the lifting frame 20 to be lowered faster up to the point of deceleration. Hence, the safety margin for decelerating the speed of lowering of the lifting frame can be reduced, and a more efficient container handler 10 is achieved. In addition, or alternatively, the speed of the vertical movement of the lifting frame 20 can be increased for the first part of the decent, which will also increase efficiency.

In addition, the control system CS may be configured to start the movement of the gripper 40 before the lifting frame 20 is in physical contact with the storage container 106 based on the signal received from the first sensor 35.

Due to the second sensor 55 being located at distance D55 from the lifting frame 20, the control system CS is able to predict more accurately the remaining vertical movement for the lifting frame 20 until physical contact between the lifting frame 20 and the top structure 11 is achieved. This also allows the lifting frame 20 to be elevated faster up to the point of deceleration. Hence, the safety margin for decelerating the speed of elevation of the lifting frame can be reduced, and a more efficient container handler 10 is achieved. In addition, or alternatively, the speed of the vertical movement of the lifting frame 20 can be increased for the first part of the elevation which will also increase efficiency.

### Alternative embodiments

Different embodiments of the invention will be described below. It should be noted that only differences with respect to the first embodiment above will be described in detail.

It is now referred to fig. 6. Here, there are only downwardly protruding first guiding pins 30, there are not any upwardly protruding second guiding pins 50. The first sensor 35 is here a capacitive sensor extending over the distance D35. The output signal from this sensor will vary depending on how large area of the sensor is being covered by the storage container. Hence, this sensor may be used to measure the distance between the lifting frame 20 and the storage container 106 accurately.

It should be noted that the same type of sensor may be used for the upwardly protruding second guiding pins 50 in the embodiment shown in fig. 5.

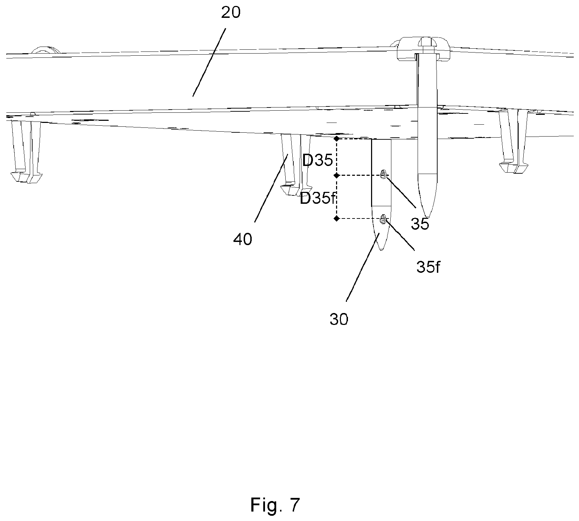

It is now referred to fig. 7. Here, similarly to fig. 6, there are only downwardly protruding first guiding pins 30, there are not any upwardly protruding second guiding pins 50. The first sensor 35 is here an optical sensor provided at the distance D35 from the lifting frame 20. The first guide pin 30 further comprises a further optical sensor 35f for sensing the position of the storage container 106 relative to the lifting frame 20, wherein the further sensor 35f is provided at a further distance D35f below the first sensor 35. The optical sensors 35, 35f are here outputting a Boolean signal. However, as there are two sensors spaced apart and the distance between the sensors are known, it is also here possible to control the movement of the lifting frame towards the storage container accurately.

In an alternative embodiment, the reference number 35f in fig. 7 may be a light source emitting light sensed by the first sensor 35.

In yet an alternative embodiment, in case the first sensor 35 and/or the second sensor 55 is a light sensor able to sense different colours or patterns, it may also be possible to provide the storage container and/or the top structure with different colours or a pattern, where each colour or parts of the pattern indicates a different height. This may increase accuracy of the measurements by using one sensor only. Fig. 8a shows the lifting frame 20 in a first position above the storage container 106. Here, the distance between the first sensor 35 and the storage container 106 is so large that the presence of a storage container 106 is not detectable by the first sensor.

Fig. 8b shows the lifting frame 20 in a second position closer to the storage container 106. Here, the first sensor 35 is detecting the presence of the storage container 106.

Fig. 8c shows the lifting frame 20 in a third position, in which the lifting frame 20 is in physical contact with the storage container 106.

The top structure 11 may comprise a receiving bore for receiving the upwardly protruding second guides. This may stabilize the lifting frame 50 and hence also the storage container lifted by the lifting frame relative to the top structure when the lifting frame is in the upper position.

In the preceding description, various aspects of the container handler have been described with reference to the illustrative embodiment. For purposes of explanation, specific numbers, systems and configurations were set forth in order to provide a thorough understanding of the system and its workings. However, this description is not intended to be construed in a limiting sense. Various modifications and variations of the illustrative embodiment, as well as other embodiments of the system, which are apparent to persons skilled in the art to which the disclosed subject matter pertains, are deemed to lie within the scope of the present invention as defined in the appended claims.

### LIST OF REFERENCE NUMBERS

- 1: Prior art automated storage and retrieval system
- 10: container handler
- 11: the top structure
- 12: lifter
- 14: bands
- 20: lifting frame
- 22a: container contacting surface
- 22b: top structure contacting surface
- 30: first guide pins
- 35: first sensor
- 35f: further sensor
- 40: gripper element
- 50: second guide pins
- 55: second sensor
- 100: Framework structure
- 102: Upright members of framework structure
- 103: Horizontal members of framework structure
- 104: Storage grid
- 105: Storage column
- 106: Storage container
- 106': Particular position of storage container
- 107: Stack
- 108: Rail system
- 110: Parallel rails in first direction (X)
- 110a: First rail in first direction (X)
- 110b: Second rail in first direction (X)
- 111: Parallel rail in second direction (Y)
- 111a: First rail of second direction (Y)
- 111b: Second rail of second direction (Y)
- 112: Access opening
- 119: First port column
- 120: Second port column
- 201: Prior art container handling vehicle
- 201a: Vehicle body of the container handling vehicle 201
- 201b: Drive means / wheel arrangement, first direction (X)
- 201c: Drive means / wheel arrangement, second direction (Y)
- 301: Prior art cantilever container handling vehicle
- 301a: Vehicle body of the container handling vehicle 301
- 301b: Drive means in first direction (X)
- 301c: Drive means in second direction (Y)
- 304: Gripping device
- 500: Control system
- X: First direction
- Y: Second direction
- Z: Third direction
- CS: control system
- D35: vertical distance
- D55: vertical distance

## Claims

1. A container handler (10) for handling a storage container (106) in a column (105) of a frame structure (100) of an automated storage and retrieval system (1), wherein the container handler (10) comprises:
- a lifting frame (20) which is arranged for vertical movement within the column (105) of the frame structure (100);
- a first guide pin (30) protruding downwardly from the lifting frame (20) for guiding the lifting frame (20) vertically within the column (105) of the frame structure (100) relative to the storage container (106); and
- a gripper element (40) protruding downwardly from the lifting frame (20) for gripping the storage container (106);
wherein the first guide pin (30) comprises a first sensor (35) for sensing the position of the lifting frame (20) relative to the storage container (106); and
wherein the container handler (10) comprises a control system (CS) provided in communication with the first sensor (35), the control system (CS) controlling the vertical movement of the lifting frame (20) and controlling the gripper element (40) based on a signal received from the first sensor (35);
**characterized in that**:
the control system (CS) is configured to start the movement of the gripper element (40) before the lifting frame (20) is in physical contact with the storage container (106) based on the signal received from the first sensor (35).

2. A container handler (10) according to claim 1, wherein the first sensor (35) is a non-contact sensor.

3. A container handler (10) according to claim 1 or 2, wherein the first sensor (35) is a capacitive sensor, an ultra-sonic sensor or an optical sensor.

4. A container handler (10) according to claim 1, wherein the first sensor (35) is provided at a vertical distance (D35) below the lifting frame (20) or is extending along a vertical distance (D35) below the lifting frame (20).

5. A container handler (10) according to any one of claims 1-4, wherein the container handler further comprises four first guide pins (30) protruding downwardly from the lifting frame (20) for guiding the lifting frame (20) vertically within the column (105) of the frame structure (100) relative to the storage container (106), wherein at least two of the first guide pins (30) comprise first sensors (35) for sensing the position of the lifting frame (20) relative to the storage container (106).

6. A container handler (10) according to claim 4, wherein the control system (CS) is further configured to decelerate the lowering of the lifting frame (20) down towards the storage container (106) based on the signal received from the first sensor (35).

7. A container handler (10) according to any one of claims 1-6, wherein the container handler (10) further comprises a top structure (11) and an electric motor (12) for moving the lifting frame (20) vertically relative to the top structure (11).

8. A container handler (10) according to claim 1, wherein the container handler (10) further comprises:
- a second guide pin (50) protruding upwardly from the lifting frame (20) for guiding the lifting frame (20) relative to the top structure (11);
wherein the second guide pin (50) comprises a second sensor (55) for sensing the position of the top structure (11) relative to the lifting frame (20).

9. A container handler (10) according to claim 8, wherein the second sensor (55) is provided at a distance (D55) above the lifting frame (20) or extends along a distance (D55) above the lifting frame (20).

10. A container handler (10) according to claim 9, wherein the control system (CS) is configured to decelerate the elevation of the lifting frame (20) up towards the top structure (11) based on the signal received the second sensor (55).

11. A container handler (10) according to any one of claims 1-10, wherein the first sensor (35) is directed towards a central axis (CA) of the lifting frame (20).

12. A container handler (10) according to any one of claims 7-9, wherein the lifting frame (20) is adapted to be received at least partially within the top structure (11), wherein the second sensor (55) is directed away from a central axis (CA) of the lifting frame (20).

13. A container handling vehicle (201, 301, 401) for handling a storage container (106) in an automated storage and retrieval system (1), wherein the container handling vehicle (201, 301, 401) comprises:
- a vehicle body (201a, 301a, 401a); and
- a container handler (10) according to any one of claims 1-12 for handling the storage container (106) relative to the vehicle body (201a, 301a, 401a).

14. A method for handling a storage container (106) in a column (105) of a frame structure (100) of an automated storage and retrieval system (1), **characterized in that** a container handler (10) according to any one of claims 1-12 is used to perform the following steps:
- sensing the position of the lifting frame (20) relative to the storage container (106) by means of a first sensor (35) provided in a first guide pin (30) protruding downwardly from the lifting frame (20); and
- controlling a vertical movement of the lifting frame (20) based on a signal received from the first sensor (35).

## Patentansprüche

1. Behälterhandhabungsvorrichtung (10) zum Handhaben eines Lagerbehälters (106) in einer Säule (105) einer Rahmenstruktur (100) eines automatisierten Lager- und Entnahmesystems (1), wobei die Behälterhandhabungsvorrichtung (10) Folgendes umfasst:
- einen Hubrahmen (20), der zur vertikalen Bewegung innerhalb der Säule (105) der Rahmenkonstruktion (100) angeordnet ist;
- einen von dem Hubrahmen (20) nach unten vorstehenden ersten Führungsstift (30) zum vertikalen Führen des Hubrahmens (20) innerhalb der Säule (105) der Rahmenstruktur (100) relativ zu dem Lagerbehälter (106); und
- ein von dem Hubrahmen (20) nach unten vorstehendes Greiferelement (40) zum Greifen des Lagerbehälters (106); wobei der erste Führungsstift (30) einen ersten Sensor (35) zum Erfassen der Position des Hubrahmens (20) relativ zu dem Lagerbehälter (106) umfasst; und
wobei die Behälterhandhabungsvorrichtung (10) ein Steuersystem (CS) umfasst, das in Kommunikation mit dem ersten Sensor (35) bereitgestellt ist, wobei das Steuersystem (CS) basierend auf einem von dem ersten Sensor (35) empfangenen Signal die vertikale Bewegung des Hubrahmens (20) steuert und das Greiferelement (40) steuert;
**dadurch gekennzeichnet, dass**:
das Steuersystem (CS) dazu ausgelegt ist, die Bewegung des Greiferelements (40) basierend auf dem von dem ersten Sensor (35) empfangenen Signal zu starten, bevor sich der Hubrahmen (20) in physischem Kontakt mit dem Lagerbehälter (106) befindet.

2. Behälterhandhabungsvorrichtung (10) nach Anspruch 1, wobei der erste Sensor (35) ein berührungsloser Sensor ist.

3. Behälterhandhabungsvorrichtung (10) nach Anspruch 1 oder 2, wobei der erste Sensor (35) ein kapazitiver Sensor, ein Ultraschallsensor oder ein optischer Sensor ist.

4. Behälterhandhabungsvorrichtung (10) nach Anspruch 1, wobei der erste Sensor (35) in einer vertikalen Distanz (D35) unter dem Hubrahmen (20) bereitgestellt ist oder sich entlang einer vertikalen Distanz (D35) unter dem Hubrahmen (20) erstreckt.

5. Behälterhandhabungsvorrichtung (10) nach einem der Ansprüche 1-4, wobei die Behälterhandhabungsvorrichtung ferner vier von dem Hubrahmen (20) nach unten vorstehende erste Führungsstifte (30) zum vertikalen Führen des Hubrahmens (20) innerhalb der Säule (105) der Rahmenstruktur (100) relativ zu dem Lagerbehälter (106) umfasst, wobei mindestens zwei der ersten Führungsstifte (30) erste Sensoren (35) zum Erfassen der Position des Hubrahmens (20) relativ zu dem Lagerbehälter (106) umfassen.

6. Behälterhandhabungsvorrichtung (10) nach Anspruch 4, wobei das Steuersystem (CS) ferner dazu ausgelegt ist, das Absenken des Hubrahmens (20) nach unten zu dem Lagerbehälter (106) hin basierend auf dem von dem ersten Sensor (35) empfangenen Signal zu verlangsamen.

7. Behälterhandhabungsvorrichtung (10) nach einem der Ansprüche 1-6, wobei die Behälterhandhabungsvorrichtung (10) ferner eine obere Struktur (11) und einen Elektromotor (12) zum vertikalen Bewegen des Hubrahmens (20) relativ zu der oberen Struktur (11) umfasst.

8. Behälterhandhabungsvorrichtung (10) nach Anspruch 1, wobei die Behälterhandhabungsvorrichtung (10) ferner Folgendes umfasst:
- einen von dem Hubrahmen (20) nach oben vorstehenden zweiten Führungsstift (50) zum Führen des Hubrahmens (20) relativ zu der oberen Struktur (11);
wobei der zweite Führungsstift (50) einen zweiten Sensor (55) zum Erfassen der Position der oberen Struktur (11) relativ zu dem Hubrahmen (20) umfasst.

9. Behälterhandhabungsvorrichtung (10) nach Anspruch 8, wobei der zweite Sensor (55) in einer Distanz (D55) über dem Hubrahmen (20) bereitgestellt ist oder sich entlang einer Distanz (D55) über dem Hubrahmen (20) erstreckt.

10. Behälterhandhabungsvorrichtung (10) nach Anspruch 9, wobei das Steuersystem (CS) dazu ausgelegt ist, das Anheben des Hubrahmens (20) nach oben zu der oberen Struktur (11) hin basierend auf dem von dem zweiten Sensor (55) empfangenen Signal zu verlangsamen.

11. Behälterhandhabungsvorrichtung (10) nach einem der Ansprüche 1-10, wobei der erste Sensor (35) zu einer Mittelachse (CA) des Hubrahmens (20) hin ausgerichtet ist.

12. Behälterhandhabungsvorrichtung (10) nach einem der Ansprüche 7-9, wobei der Hubrahmen (20) dazu geeignet ist, zumindest teilweise innerhalb der oberen Struktur (11) aufgenommen zu sein, wobei der zweite Sensor (55) von einer Mittelachse (CA) des Hubrahmens (20) weg ausgerichtet ist.

13. Behälterhandhabungsfahrzeug (201, 301, 401) zum Handhaben eines Lagerbehälters (106) in einem automatisierten Lager- und Entnahmesystem (1), wobei das Behälterhandhabungsfahrzeug (201, 301, 401) Folgendes umfasst:
- eine Fahrzeugkarosserie (201a, 301a, 401a); und
- eine Behälterhandhabungsvorrichtung (10) nach einem der Ansprüche 1-12 zum Handhaben des Lagerbehälters (106) relativ zu der Fahrzeugkarosserie (201a, 301a, 401a).

14. Verfahren zum Handhaben eines Lagerbehälters (106) in einer Säule (105) einer Rahmenstruktur (100) eines automatisierten Lager- und Entnahmesystems (1),
**dadurch gekennzeichnet, dass** eine Behälterhandhabungsvorrichtung (10) nach einem der Ansprüche 1-12 verwendet wird, um die folgenden Schritte durchzuführen:
- Erfassen der Position des Hubrahmens (20) relativ zu dem Lagerbehälter (106) mittels eines ersten Sensors (35), der in einem von dem Hubrahmen (20) nach unten vorstehenden ersten Führungsstift (30) bereitgestellt ist; und
- Steuern einer vertikalen Bewegung des Hubrahmens (20) basierend auf einem von dem ersten Sensor (35) empfangenen Signal.

## Revendications

1. Manipulateur de récipient (10) destiné à manipuler un récipient de stockage (106) dans une colonne (105) d'une structure de cadre (100) d'un système automatisé de stockage et de récupération (1), le manipulateur de récipient (10) comprenant :
- un cadre de levage (20) agencé pour se déplacer verticalement à l'intérieur de la colonne (105) de la structure de cadre (100) ;
- une première broche de guidage (30) faisant saillie vers le bas à partir du cadre de levage (20) pour guider le cadre de levage (20) verticalement à l'intérieur de la colonne (105) de la structure de cadre (100) par rapport au récipient de stockage (106) ; et
- un élément de préhension (40) faisant saillie vers le bas à partir du cadre de levage (20) pour saisir le récipient (106) de stockage ;
la première broche de guidage (30) comprenant un premier capteur (35) pour détecter la position du cadre de levage (20) par rapport au récipient de stockage (106) ; et
le manipulateur de récipient (10) comprenant un système de commande (CS) prévu en communication avec le premier capteur (35), le système de commande (CS) commandant le déplacement vertical du cadre de levage (20) et commandant l'élément de préhension (40) sur la base d'un signal reçu du premier capteur (35) ;
**caractérisé en ce que**
le système de commande (CS) est configuré pour démarrer le mouvement de l'élément de préhension (40) avant que le cadre de levage (20) ne soit en contact physique avec le récipient de stockage (106) sur la base du signal reçu du premier capteur (35).

2. Manipulateur de récipient (10) selon la revendication 1, le premier capteur (35) étant un capteur sans contact.

3. Manipulateur de récipient (10) selon la revendication 1 ou 2, le premier capteur (35) étant un capteur capacitif, un capteur ultrasonore ou un capteur optique.

4. Manipulateur de récipient (10) selon la revendication 1, le premier capteur (35) étant prévu à une distance verticale (D35) au-dessous du cadre de levage (20) ou s'étendant le long d'une distance verticale (D35) au-dessous du cadre de levage (20).

5. Manipulateur de récipient (10) selon l'une quelconque des revendications 1 à 4, le manipulateur de récipient comprenant en outre quatre premières broches de guidage (30) faisant saillie vers le bas à partir du cadre de levage (20) pour guider le cadre de levage (20) verticalement à l'intérieur de la colonne (105) de la structure de cadre (100) par rapport au récipient de stockage (106), au moins deux des premières broches de guidage (30) comprenant des premiers capteurs (35) pour détecter la position du cadre de levage (20) par rapport au récipient de stockage (106).

6. Manipulateur de récipient (10) selon la revendication 4, le système de commande (CS) étant en outre configuré pour ralentir l'abaissement du cadre de levage (20) vers le bas en direction du récipient de stockage (106) sur la base du signal reçu du premier capteur (35).

7. Manipulateur de récipient (10) selon l'une quelconque des revendications 1 à 6, le manipulateur de récipient (10) comprenant en outre une structure supérieure (11) et un moteur électrique (12) pour déplacer le cadre de levage (20) verticalement par rapport à la structure supérieure (11).

8. Manipulateur de récipient (10) selon la revendication 1, le manipulateur de récipient (10) comprenant en outre :
- une seconde broche de guidage (50) faisant saillie vers le haut à partir du cadre de levage (20) pour guider le cadre de levage (20) par rapport à la structure supérieure (11) ;
la seconde broche de guidage (50) comprenant un second capteur (55) pour détecter la position de la structure supérieure (11) par rapport au cadre de levage (20).

9. Manipulateur de récipient (10) selon la revendication 8, le second capteur (55) étant prévu à une distance (D55) au-dessus du cadre de levage (20) ou s'étendant le long d'une distance (D55) au-dessus du cadre de levage (20).

10. Manipulateur de récipient (10) selon la revendication 9, le système de commande (CS) étant configuré pour ralentir l'élévation du cadre de levage (20) vers la structure supérieure (11) sur la base du signal reçu par le second capteur (55).

11. Manipulateur de récipient (10) selon l'une quelconque des revendications 1 à 10, le premier capteur (35) étant dirigé vers un axe central (CA) du cadre de levage (20).

12. Manipulateur de récipient (10) selon l'une quelconque des revendications 7 à 9, le cadre de levage (20) étant adapté pour être reçu au moins partiellement à l'intérieur de la structure supérieure (11), le second capteur (55) étant dirigé à l'écart d'un axe central (CA) du cadre de levage (20).

13. Véhicule de manutention de récipients (201, 301, 401) destiné à manipuler un récipient de stockage (106) dans un système automatisé de stockage et de récupération (1), le véhicule de manutention de récipients (201, 301, 401) comprenant :
- une carrosserie de véhicule (201a, 301a, 401a); et
- un manipulateur de récipient (10) selon l'une quelconque des revendications 1 à 12 pour manipuler le récipient de stockage (106) par rapport à la carrosserie de véhicule (201a, 301a, 401a).

14. Procédé de manutention d'un récipient (106) de stockage dans une colonne (105) d'une structure de cadre (100) d'un système automatisé de stockage et de récupération (1),
**caractérisé en ce qu'**on utilise un manipulateur de récipient (10) selon l'une quelconque des revendications 1 à 12 pour réaliser les étapes suivantes :
- la capture de la position du cadre de levage (20) par rapport au récipient de stockage (106) au moyen d'un premier capteur (35) prévu dans une première broche de guidage (30) faisant saillie vers le bas à partir du cadre de levage (20) ; et
- la commande d'un déplacement vertical du cadre de levage (20) sur la base d'un signal reçu du premier capteur (35).
